Europäisches Patentamt

European Patent Office

Office européen des brevets

(11) Veröffentlichungsnummer: **0 162 274**

**A1**

(12) # EUROPÄISCHE PATENTANMELDUNG

(21) Anmeldenummer: 85104493.3

(22) Anmeldetag: 13.04.85

(51) Int. Cl.⁴: **C 08 F 6/02**

(30) Priorität: 26.04.84 DE 3415527

(43) Veröffentlichungstag der Anmeldung:
27.11.85 Patentblatt 85/48

(84) Benannte Vertragsstaaten:
BE DE FR GB IT LU NL

(71) Anmelder: Ruhrchemie Aktiengesellschaft
Bruchstrasse 219
D-4200 Oberhausen 11(DE)

(72) Erfinder: Bexten, Ludger, Dr. Dipl.-Chem.
Im Freihof 9
D-4224 Hünxe(DE)

(72) Erfinder: Hobes, John, Dr. Dipl.-Chem.
Ernastrasse 2b
D-4220 Dinslaken(DE)

(72) Erfinder: Payer, Wolfgang, Dr. Dipl.-Chem.
Zedernweg 58
D-4230 Wesel 1(DE)

(72) Erfinder: Spaleck, Walter, Dr. Dipl.-Chem.
Alexander-Fleming-Strasse 2
D-4290 Bocholt 1(DE)

(74) Vertreter: Reichelt, Karl-Heinz, Dr. et al,
m. Br. Ruhrchemie Aktiengesellschaft Abt. PLD Postfach
13 01 60
D-4200 Oberhausen 13(DE)

(54) Verfahren zur Polymerisation u. Copolymerisation von Ethylen.

(57) Die Desaktivierung von Katalysatorsystemen aus einer Übergangsmetallverbindung und einer organischen Aluminiumverbindung, die zur Polymerisation von Ethylen oder zur Copolymerisation von Ethylen mit einem α-Olefin bei Drücken von 300 bis 3 500 bar und Temperaturen zwischen 150 und 350 °C eingesetzt werden, erfolgt mit wachsartigen Mischpolymerisaten des Ethylens, die Sauerstoff, Stickstoff, Phosphor und/oder Schwefel enthalten. Sie weisen einen Comonomeranteil von 5 bis 75 Gew.-% auf und besitzen ein Molekulargewicht von 100 bis 10 000.

Ruhrchemie Aktiengesellschaft, Oberhausen 11

Verfahren zur Polymerisation und Copolymerisation
von Ethylen

Die Erfindung betrifft ein kontinuierliches Verfahren zur
Polymerisation und Copolymerisation von Ethylen bei Temperaturen zwischen 150 und 350 °C und Drücken von 300 bis
3 500 bar in Gegenwart von Ziegler-Katalysatoren.

Die Polymerisation und Copolymerisation von Ethylen in den
genannten Temperatur- und Druckbereichen ist bekannt. Als
Katalysatoren oder Initiatoren können die verschiedensten
Substanzen eingesetzt werden, die im Verlauf der Reaktion
Radikale oder Ionen bilden. Gebräuchliche Katalysatoren sind
z.B. Sauerstoff, Peroxide wie Diacylperoxide oder Cumolhydroperoxid und aliphatische Azoverbindungen wie $\alpha,\alpha'$-Azo-
isobutyronitril. Auch Ziegler-Katalysatoren, die ursprünglich für die Niederdruckpolymerisation von Ethylen und Propylen entwickelt worden waren, finden inzwischen bei Hochdruckprozessen Anwendung.

Die Polymerisation und Copolymerisation von Ethylen unter
hohem Druck erfolgt in Autoklaven oder in sogenannten
Röhrenraktoren. Nach dem Verlassen des Hochdruckreaktors
wird das Reaktionsgemisch in wenigstens einen Separator
geleitet, in dem solche Druck- und Temperaturbedingungen

...

herrschen, daß das Ethylen und gegebenenfalls vorhandene Comonomere in einer oder mehreren Stufen von dem im Reaktor gebildeten Polymeren abgetrennt wird.

Wegen der hohen Reaktivität von Ziegler-Katalysatoren ist bei ihrer Verwendung nicht auszuschließen, daß noch vorhandene Monomere auch im Separator und im Gaskreislaufsystem polymerisiert werden, wobei es zur Bildung unerwünschter, niedermolekularer Produkte wie Wachse, kommt, die die Qualität des Polymerisats beeinträchtigen. Überdies können Betriebsstörungen durch Bildung schwer zu beseitigender Beläge aus Polymerisat in Leitungen, Kühlern und Abscheidern auftreten.

Um eine Nachpolymerisation in den Abscheide- und Kühlapparaten des Gaskreislaufssystems zu verhindern, setzt man dem Reaktionsgemisch nach Verlassen des Reaktors Substanzen zu, die den Katalysator desaktivieren.

Aus der DE-OS 26 07 601 ist es bekannt, für diesen Zweck Alkali- und/oder Erdalkalisalze gesättigter Fettsäuren oder aromatischer Carbonsäuren oder auch Zinkstearat einzusetzen. Hierbei handelt es sich um schwerlösliche Verbindungen, die als heiße Lösungen oder als Suspensionen in Kohlenwasserstoffen gehandhabt werden müssen. Es kommt daher häufig zu Leitungsverstopfungen, die ein sofortiges Abstellen der Gesamtanlage erforderliche machen. Ferner gelangen erhebliche Mengen Lösungsmittel in den Gaskreislauf, die mit dem Produkt ausgetragen oder anderweitig entfernt werden müssen. Bei der Einspeisung der Salze als Schmelze ist die Gefahr von Leitungsverstopfungen noch größer und eine homogene Verteilung des Desaktivators schwierig. Darüber hinaus verlangt das Pumpen von Salzschmelzen unter hohem Druck einen erheblichen technischen Aufwand. Schließlich ist eine völlige

...

Unterbindung der Polymerisation hinter dem Reaktor nur
dann möglich, wenn große Mengen der desaktivierenden
Verbindung zugesetzt werden. Die dabei entstehenden Umsetzungsprodukte werden im Kreis dem Reaktor wieder zugeleitet und führen zu einer Beeinträchtigung der Polymerisationsreaktion durch Minderung der Katalysatoraktivität.

Es bestand daher die Aufgabe, Verbindungen zu finden, die
sich vollständig mit dem im Monomeren-Polymeren-Gemisch enthaltenen Katalysatorsystem zu nichtflüchtigen und nichtpolymerisationsaktiven Verbindungen umsetzen, leicht dosierbar
sind und sich ohne Schwierigkeiten im Reaktionsgemisch homogen verteilen. Darüber hinaus sollen diese Verbindungen in
lebensmittelrechtlicher Hinsicht unbedenklich sein und in
den Produktionsanlagen keine Korrosionsprobleme hervorrufen.

Erfindungsgemäß wird die Aufgabe gelöst durch ein Verfahren
zur Polymerisation von Ethylen oder zur Copolymerisation von
Ethylen mit einem $\alpha$-Olefin in einem rohrförmigen Reaktor
oder in einem Autoklaven und in Gegenwart eines Katalysatorsystems, das aus einer Übergangsmetallverbindung und einer
organischen Aluminiumverbindung besteht bei Drücken von
300 bis 3 500 bar und Temperaturen zwischen 150 und 350 °C,
wobei das Katalysatorsystem mit einer ausreichenden Menge
wenigstens eines desaktivierenden Stoffes so behandelt wird,
daß die Reaktionsprodukte der Desaktivierung im Polymeren
verbleiben können, dadurch gekennzeichnet, daß als desaktivierende Stoffe wachsartige Mischpolymerisate des Ethylens,
die Sauerstoff, Stickstoff, Phosphor und/oder Schwefel enthalten eingesetzt werden.

Überraschenderweise besitzen die erfindungsgemäß als desaktivierende Stoffe eingesetzten Mischpolymerisate des Ethylens die vorstehend geschilderten Nachteile der bekannten
Desaktivatoren nicht.

...

Es hat sich gezeigt, daß die erfindungsgemäßen Desaktivatoren problemlos in Hochdruckapparaturen eindosiert werden können. Aktive Katalysatorreste, die den Reaktor verlassen, werden selbst bei Einsatz sehr geringer Desaktivatormengen quantitativ und irreversibel desaktiviert. Dabei verbleibt der Desaktivator entweder im Reaktionsprodukt oder er wird in den nachgeschalteten Abscheidern abgetrennt, so daß das Kreisgas ohne jegliche Beeinträchtigung der Polymerisation in den Reaktor zurückgeführt werden kann. Für den Prozeß schädliche Zersetzungsprodukte werden nicht gebildet und die Produktqualität erfährt durch die Desaktivierung keine Beeinträchtigung.

Unter Mischpolymerisaten werden Mischpolymerisate des Ethylens verstanden, die in an sich bekannter Weise hergestellt werden, einen Comonomergehalt von 5 bis 75 Gew.-% enthalten und als Comonomere ungesättigte Carbonsäuren mit 3 bis 9 Kohlenstoffatomen, Vinylester, Vinylalkohol, Alkenylester, N-Vinylverbindungen, N-Alkenylverbindungen, Vinylketone, Alkenylketone, Vinylsulfone, Alkenylsulfone, Vinylsulfonate, Alkenylsulfonate, Dicarbonate, Carbonsäureanhydride, Vinylphosponsäureester, und/oder Vinylphosphinsäureester besitzen.

Für die Desaktivierung unter den Bedingungen der Hochdruckpolymersation sind besonders Mischpolymerisate der vorstehend genannten Art geeignet, die aufgrund ihrer molekularen Struktur bei Zimmertemperatur flüssig und/oder in Lösungsmitteln, bevorzugt in Kohlenwasserstoffen löslich sind und als Lösung oder auch ohne Lösungsmittel flüssig eingesetzt werden können. Hierdurch ist ihre leichte Dosierbarkeit gewährleistet. Derartige Mischpolymerisate werden z. B. durch Mischpolymerisation von Ethylen mit und den vorstehend genannten Comonomeren in an sich bekannter Weise hergestellt, wobei die gewünschten Eigenschaften beispielsweise durch die Wahl des Ethylen-Comonomer-Verhältnisses erzielt werden.

...

Die als Desaktivatoren eingesetzten wachsartigen Mischpolymerisate werden durch gemeinsame Polymerisation der entsprechenden Comonomeren unter Drücken von 1000 bis 3000 bar und Temperaturen von 200 bis 300 °C in Autoklaven oder Rohrreaktoren in Gegenwart radikalischer Initiatoren ($O_2$, Dilauroylperoxid, Di-tert.-butylperoxid, Azobuttersäuredinitril etc.), die in Mengen von 20 bis 250 ppm bezogen auf Einsatzprodukt, zugesetzt werden, hergetellt. Das Molekulargewicht der sich bildenden Mischpolymerisate wird mit Hilfe von Moderatoren wie $H_2$, gesättigten oder ungesättigten Kohlenwasserstoffen, aliphatischen Alkoholen oder Carbonylverbindungen reguliert.

Um vorstehend bezeichnete Mischpolymerisate im Rückgassystem leicht abscheiden zu können, sollen sie ein Mindestmolekulargewicht aufweisen. Zu hohe Molekulargewichte sind ungünstig weil u.a. mit steigendem Molekulargewicht die desaktivierende Wirkung der Mischpolymerisate nachläßt. Bewährt haben sich Mischpolymerisate mit Molekulargewichten zwischen 100 und 10 000. Besonders bevorzugt sind solche mit Molekulargewichten zwischen 500 und 5 000.

Die Einspeisung der Mischpolymerisate in das Reaktorsystem kann in reiner Form oder als Lösung erfolgen. Geeignete Lösungsmittel sind insbesondere aliphatische und aromatische Kohlenwasserstoffe, die als reine Substanzen oder als Mischungen verwendet werden können.

Die in dem erfindungsgemäßen Verfahren eingesetzten Ziegler-Katalysatoren bestehen aus einer Übergangsmetallverbindung, im allgemeinen einer Titanverbindung. Besonders geeignet ist Titantrichlorid, das mit Aluminiumchlorid mischkristallisiert ist. Mit Erfolg finden ferner Titan-Magnesium-Trägerkatalysatoren Anwendung, die in bekannter Weise z. B. durch Reaktion von Ti(III)- oder Ti(IV)-verbindungen mit Magnesiumverbindungen erhalten werden können. Zweiter Bestandteil

...

0162274 [19]

des Katalysatorsystems ist eine organische Aluminiumverbindung. Hierzu zählen Monoalkylaluminiumdihalogenide, Dialkylaluminiummonohalogenide und insbesondere Trialkylaluminiumverbindungen. Die in den organische Aluminiumverbindungen enthaltenen Alkylreste besitzen üblicherweise jeweils 2 bis 20 Kohlenstoffatome.

Das erfindungsgemäße Verfahren ist sowohl für die Homopolymerisation von Ethylen geeignet, als auch für die Copolymerisation von Ethylen mit anderen $\alpha$-Olefinen. Solche $\alpha$-Olefine sind z.B. Propylen, Buten-1 und Hexen-1. Sie sind im Polymerisat üblicherweise in Mengen bis 10 Gew.-% enthalten.

Die Polymerisation oder Copolymerisation des Ethylens wird in Autoklaven oder in Rohrreaktoren durchgeführt.

Die Reaktionstemperatur beträgt 150 bis 350 $^{\circ}$C und insbesondere 170 bis 280 $^{\circ}$C, der Reaktionsdruck liegt oberhalb 500 bar und beträgt insbesondere 800 bis 1 600 bar. Bei Verwendung von Rohrreaktoren werden die Monomeren zunächst auf 130 bis 180 $^{\circ}$C aufgeheizt. Darauf dosiert man das Katalysatorsystem zu. Durch die freiwerdende Polymerisationswärme steigt die Temperatur des Reaktionsgemisches auf Werte von 150 bis 350 $^{\circ}$C an. Danach fällt sie durch Wärmeabführung nach außen langsam wieder ab. Die Polymerisation kann durch Zugabe geeigneter Agenzien gesteuert werden; so fügt man den Monomeren zur Einstellung eines bestimmten Molekulargewichtsbereiches z.B. Wasserstoff zu. Nach einer Verweilzeit von 30 bis 240 sek. im Reaktor wird das Reaktionsgemisch im Hochdruckabscheider auf 150 bis 300 bar entspannt. Das nicht umgesetzte Ethylen wird abgekühlt, erneut komprimiert und dem Reaktor wieder zugeführt.

Die Polymerisation nach dem erfindungsgemäßen Verfahren erfolgt kontinuierlich. Daher müssen die Desaktivatoren in das Reaktionsgemisch an einer Stelle eingeführt werden, wo die Polymerisation abgebrochen werden soll. Dieser Punkt kann

...

R.1969
0162274

sowohl vor als auch nach dem Reaktorauslaßventil liegen. Nach einer zweckmäßigen Ausgestaltung der neuen Arbeitsweise speist man den Desaktivator unmittelbar vor oder unmittelbar nach dem Reaktorauslaßventil ein. Nach einer anderen bevorzugten Ausführungsform des erfindungsgemäßen Verfahrens setzt man bei Durchführung der Polymerisation in einem rohrförmigen Reaktor den Desaktivator an einer Stelle, die 1/5 bis 1/2 der Reaktorlänge vor dem Auslaßventil liegt, zu. Andere geeignete Einspeisungsstellen sind bestimmte Punkte des Abscheider- und des Rückgassystems.

Die zudosierte Menge an Mischpolymerisat muß ausreichen, um die Desaktivierung des Katalysatorsystems sicherzustellen. Diese Desaktivierung wird erreicht, wenn wenigstens eine Komponente des Katalysatorsystems, d.h. entweder die Übergangsmetellverbindung oder die organische Aluminiumverbindung mit dem Desaktivator reagiert hat. Üblicherweise setzt man die desaktivierenden Stoffe in einer Menge von 1:1 bis 20:1 g je g Übergangsmetall ein.

In den folgende Beispielen wird die Erfindung näher erläutert, ohne sie in ihrem Schutzumfang zu begrenzen.

## Beispiele

Die in den Beispielen beschriebene Ethylenpolymerisation wird in einem Autoklaven bei 1 500 bar und einer mittleren Reaktionstemperatur von 240 $^{\circ}$C (eingestellt über die Katalysatorzugabe) durchgeführt. Die Molekulargewichtsregelung erfolgt mit Wasserstoff, der in einer Menge von 1 Vol.-% (bezogen auf Ethylen) zugesetzt wird. Die mittlere Verweilzeit des Gemisches aus Schmelze und Monomeren im Reaktor beträgt 52 Sekunden. Als Katalysator wird violettes Titantrichlorid in Form von $TiCl_3 \cdot 1/3\ AlCl_3$ und Tri-n-octylaluminium als Aktivator verwendet. (Verhältnis Ti:Al = 1:10.) Es wird jeweils soviel Katalysator/Aktivator zudosiert, daß die vorgegebene Reaktionstemperatur konstant bleibt.

Das nicht umgesetzte Ethylen wird von der Polymerschmelze in zwei dem Reaktor nachgeschalteten Abscheidern, einem Hochdruckabscheider, der bei 250 bar und 200 $^{\circ}$C und einem Niederdruckabscheider, der bei 5 bar und 180 $^{\circ}$C betrieben wird, abgetrennt und zurückgeführt.

Die untersuchten Desaktivatoren werden in Form verdünnter Benzinlösungen unmittelbar hinter dem Regelventil des Reaktors eingespritzt. Ihre Menge wird sukzessive reduziert bis ein deutlicher Temperaturanstieg im Hochdruck-Abscheider eintritt. Die so ermittelte Menge ist die Minimalmenge in der der Desaktivator eingesetzt werden muß.

Die Versuche sind in der nachfolgenden Tabelle zusammengefaßt. Sie wurden kontinuierlich durchgeführt.

Tabelle

| Beispiel | Desaktivator | | | V 140 *) (mPas) | Minimalmenge an Desaktivator bez. auf Feststoff (g/h) | Einsatz Desaktivator : Ti (Gewichtsverhältnis) |
|---|---|---|---|---|---|---|
| | Zusammensetzung | | in Gew.-% | | | |
| 1 | Ethylen | | 80 | | | |
| | Vinylacetat | | 20 | 250 | 0,6 | 12 : 1 |
| 2 | Ethylen | | 60 | | | |
| | Vinylacetat | | 40 | 70 | 0,3 | 6 : 1 |
| 3 | Ethylen | | 65 | | | |
| | Vinylphosphonsäure-diethylester | | 20 | 400 | 0,3 | 6 : 1 |
| | Vinylacetat | | 15 | | | |
| 4 | Ethylen | | 76 | | | |
| | Vinylacetat | | 5 | 700 | 0,6 | 12 : 1 |
| | n-Butylacrylat | | 19 | | | |
| 5 | Ethylen | | 58 | | | |
| | Acrylsäure | | 10 | 550 | 0,8 | 16 : 1 |
| | tert.-Butylacrylat | | 32 | | | |
| 6 | Ethylen | | 67 | | | |
| | Vinylacetat | | 15 | 600 | 0,3 | 6 : 1 |
| | Vinylmethylacetamid | | 18 | | | |
| 7 | Ethylen | | 66 | | | |
| | Vinylacetat | | 9 | 350 | 0,5 | 10 : 1 |
| | Vinylacetat teilverseift | | 25 | | | |

*) Messung der Viskosität bei 140 $^{\circ}$C mittels eines Rotationsviskosimeters

—1—

Ruhrchemie Aktiengesellschaft, Oberhausen 11

Patentansprüche

1. Verfahren zur Polymerisation von Ethylen oder zur Copolymerisation von Ethylen mit einem $\alpha$-Olefin in einem
   rohrförmigen Reaktor oder in einem Autoklaven und in Gegenwart eines Katalysatorsystems, das aus einer Übergangsmetallverbindung und einer organischen Aluminiumverbindung besteht, bei Drücken von 300 bis 3 500 bar und
   Temperaturen zwischen 150 und 350 °C, wobei das Katalysatorsystem mit einer ausreichenden Menge wenigstens eines
   desaktivierenden Stoffes so behandelt wird, daß die Reaktionsprodukte der Desaktivierung im Polymeren verbleiben können, dadurch gekennzeichnet, daß als desaktivierende
   Stoffe wachsartige Mischpolymerisate des Ethylens, die
   Sauerstoff, Stickstoff, Phosphor und/oder Schwefel enthalten, eingesetzt werden.

2. Verfahren nach Anspruch 1, dadurch gekennzeichnet, daß
   die Mischpolymerisate eine Comonomergehalt von 5 bis
   75 Gew.-% enthalten.

3. Verfahren nach Anspruch 1 bis 2 dadurch gekennzeichnet, daß
   die Mischpolymerisate des Ethylens als Comonomere ungesättigte Carbonsäuren mit 3 bis 9 Kohlenstoffatomen, Vinylester, Vinylalkohol, Alkenylester, N-Vinylverbindungen,
   N-Alkenylverbindungen, Vinylketone, Alkenylketone, Vinylsulfone, Alkenylsulfone, Vinylsulfonate, Alkenylsulfonate,
   Dicarbonate, Carbonsäureanhydride, Vinylphosponsäureester,
   und/oder Vinylphosphinsäureester enthalten.

...

4. Verfahren nach Anspruch 1 bis 3, dadurch gekennzeichnet, daß die Mischpolymerisate Molekulargewichte zwischen 100 und 10 000, insbesondere zwischen 500 und 5 000 aufweisen.

5. Verfahren nach Anspruch 1 bis 4, dadurch gekennzeichnet, daß die Mischpolymerisate unmittelbar vor oder unmittelbar nach dem Reaktorauslaßventil eingespeist werden.

6. Verfahren nach Anspruch 1 bis 5, dadurch gekennzeichnet, daß bei Durchführung der Polymerisation in einem rohrförmigen Reaktor die Mischpolymerisate an einer Stelle, die 1/5 bis 1/2 der Reaktorlänge vor dem Auslaßventil liegt, in den Reaktor eingespeist werden.

7. Verfahren nach Anspruch 1 bis 6, dadurch gekennzeichnet, daß die Mischpolymerisate in einer Menge von 1:1 bis 20:1 g/g Übergangsmetall, eingesetzt werden.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,X | EP-A-0 112 054 (ASAHI KASEI KOGYO K.K.)<br>* Patentansprüche 1-6; Seite 10, Zeile 5 - Seite 16, Zeile 10; Beispiele *<br>--- | 1-7 | C 08 F 6/02 |
| A | FR-A-2 302 305 (SOCIETE CHIMIQUE DES CHARBONNAGES)<br>* Patentansprüche; Seite 2, Zeile 35 - Seite 3, Zeile 27 * & DE - A - 2 607 601 (Kat. D)<br>----- | 1,5,6 | |

| | | | RECHERCHIERTE SACHGEBIETE (Int. Cl.4) |
|---|---|---|---|
| | | | C 08 F |

Der vorliegende Recherchenbericht wurde für alle Patentansprüche erstellt.

| Recherchenort<br>DEN HAAG | Abschlußdatum der Recherche<br>13-08-1985 | Prüfer<br>HALLEMEESCH A.D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82